# EUROPEAN PATENT APPLICATION

(11) **EP 4 848 097 A1**
(43) Date of publication of application: **02.12.2026**
(21) Application number: 25183819.9
(22) Date of filing: 18.06.2025
(51) Int. Cl.: G06F 13/40

(54) **CONTROL SYSTEM WITH INTERFACE SWITCHING FUNCTION AND OPERATION METHOD THEREOF**

(30) Priority: 29.05.2025 US 202519222455
(71) Applicant: Delta Electronics, Inc., Taoyuan City 33341 (TW)
(72) Inventor: WANG, Tsung-Yi, Taoyuan City (TW)
(74) Representative: 2K Patent Partnerschaft mbB

(57) **Abstract**

A control system (100) includes a first switch module (110), a second switch module (120) and a control module (130). The first switch module (110) is connected to an external control device (150). The second switch module (120) is connected to a chip unit (160). The second switch module (120) sets output ports in an unconnected mode. The control module (130) is connected to the first switch module (110) and the second switch module (120). The control module (130) receives a first operation command through the first switch module (110), and controls the second switch module (120) to perform a first switch operation according to the first operation command, so that the second switch module (120) changes one of the output ports of the second switch module (120) to a connected mode from the unconnected mode, and the external control device (150) is connected to the chip unit (160) through the one of the output ports of the second switch module (120).

## Description

### BACKGROUND OF THE INVENTION

### Field of the Invention

The present invention relates to a control system, and in particular it relates to a control system with an interface switching function and an operation method thereof.

### Description of the Related Art

Generally speaking, most automotive products need to retain a debug path, which is usually a universal asynchronous receiver/transmitter (UART) or a universal serial bus (USB). However, the above automotive products may use a backdoor interface, which puts the security of product data at risk. Therefore, how to effectively avoid the use of a backdoor interface to ensure the security of product data has become an important issue.

### BRIEF SUMMARY OF THE INVENTION

An embodiment of the present invention provides a control system with an interface switching function and an operation method thereof, thereby effectively avoiding the use of a backdoor interface, so as to ensure the security of the product data.

An embodiment of the present invention provides a control system with an interface switch function, which includes a first switch module, a second switch module and a control module. The first switch module is connected to an external control device. The second switch module is connected to a chip unit. The second switch module is configured to set a plurality of output ports in an unconnected mode. The control module is connected to the first switch module and the second switch module. The control module is configured to receive a first operation command through the first switch module, and to control the second switch module to perform a first switch operation according to the first operation command, so that the second switch module changes one of the output ports of the second switch module to a connected mode from the unconnected mode, and the external control device is connected to the chip unit through the one of the output ports of second switch module.

An embodiment of the present invention provides an operation method of a control system with an interface switching function, which includes the following steps. A first switch module connected to an external control device is provided. A second switch module connected to a chip unit is provided, wherein the second switch module is configured to set a plurality of output ports in an unconnected mode. A control module connected to the first switch module and the second switch module is provided. The control module is used to receive a first operation command through the first switch module. The control module is used to control the second switch module to perform a first switch operation according to the first operation command, so that the second switch module changes one of the output ports of the second switch module to a connected mode from the unconnected mode, and the external control device is connected to the chip unit through the one of the output ports of the second switch module

According to the control system with the interface switching function and the operation method thereof disclosed by the present invention, the first switch module is connected to the external control device. The second switch module is connected to the chip unit. The second switch module is configured to set the output ports in the unconnected mode. The control module receives the first operation command through the first switch module, and controls the second switch module to perform the first switch operation according to the first operation command, so that the second switch module changes one of the output ports of the second switch module to the connected mode from the unconnected mode, and the external control device is connected to the chip unit through the one of the output ports of the second switch module. Therefore, it may effectively avoid the use of a backdoor interface, so as to ensure the security of the product data.

### BRIEF DESCRIPTION OF THE DRAWINGS

The present invention can be more fully understood by reading the subsequent detailed description and examples with references made to the accompanying drawings, wherein:
FIG. 1 is a schematic view of a control system with an interface switching function according an embodiment of the present invention;
FIG. 2 is a schematic view of a second switch module according an embodiment of the present invention;
FIG. 3 is a schematic view of a control module according an embodiment of the present invention;
FIG. 4 a schematic view of a first switch module according an embodiment of the present invention;
FIG. 5 is a flowchart of an operation method of a control system with an interface switching function according an embodiment of the present invention; and
FIG. 6 is a flowchart of an operation method of a control system with an interface switching function according another embodiment of the present invention.

### DETAILED DESCRIPTION OF THE INVENTION

Technical terms of the disclosure are based on general definition in the technical field of the disclosure. If the disclosure describes or explains one or some terms, definition of the terms is based on the description or explanation of the disclosure. Each of the disclosed embodiments has one or more technical features. In possible implementation, a person skilled in the art would selectively implement all or some technical features of any embodiment of the disclosure or selectively combine all or some technical features of the embodiments of the disclosure.

In each of the following embodiments, the same reference number represents an element or component that is the same or similar.

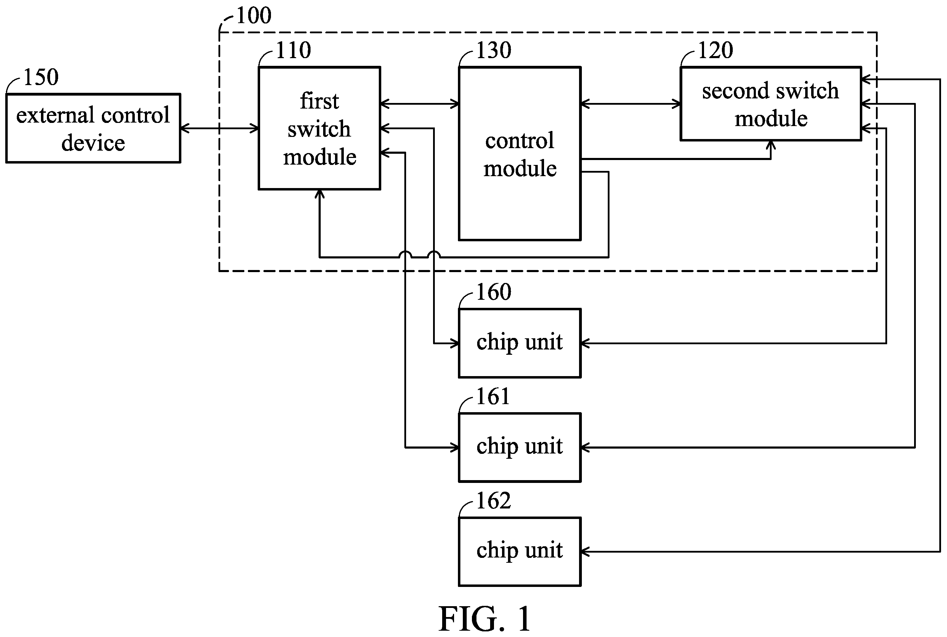

FIG. 1 is a schematic view of a control system with an interface switching function according an embodiment of the present invention. Please refer to FIG. 1. The control system 100 includes a first switch module 110, a second switch module 120 and a control module 130.

The first switch module 110 is connected to an external control device 150. In some embodiments, the first switch module 110 may be a universal serial bus (USB) switch, and the external control device 150 may be a test control computer (TCC) or a main controller unit. In some embodiments, the external control device 150 is connected to the first switch module 110 through a USB 2.0 cable, but the embodiment of the present invention is not limited thereto.

The second switch module 120 is connected to a chip unit 160. The second switch module 120 is configured to set a plurality of output ports in an unconnected mode. In some embodiments, the second switch module 120 may be a universal asynchronous receiver/transmitter multiplexer (UART MUX) and the chip unit 160 may be main chip. In some embodiments, the chip unit 160 is connected to the second switch module 120 through a universal asynchronous receiver/transmitter interface, but the embodiment of the present invention is not limited thereto.

The control module 130 is connected to the first switch module 110 and the second switch module 120. In some embodiments, the control module 130 may be a future technology devices international (FTDI) chip, but the embodiment of the present invention is not limited thereto. In some embodiments, the control module 130 is connected to the first switch module 110 through a USB 2.0 cable, and the control module 130 is connected to the second switch module 120 through a UART interface, but the embodiment of the present invention is not limited thereto.

The control module 130 may receive a first operation command through the first switch module 110. That is, the external control device 150 may generate the first operation command, and the first operation command may be transmitted to the control module 130 through the first switch module 110. Then, the control module 130 may control the second switch module 120 to perform a first switch operation according to the first operation command, so that the second switch module 120 changes one of the output ports of the second switch module 120 to a connected mode from the unconnected mode, and the external control device 150 may be connected to the chip unit 160 through the one of the output ports of the second switch module 120. That is, when the second switch module 120 sets the output ports of the second switch module 120 in the unconnected mode, the external control device 150 may not be connected to the chip unit 160 through the second switch module 120, so that the external control device 150 may not read the internal data of the chip unit 160. Therefore, it may effectively avoid the use of a backdoor interface, so as to ensure the security of the product data.

In some embodiments, the control module 130 may generate a first switch signal to the second switch module 120 according to the first operation command, and the second switch module 120 may perform the first switch operation according to the first switch signal, so that the second switch module 120 may change the one of the output ports of the second switch module 120 to the connected mode from the unconnected mode. For example, when the control module 130 does not receive the first operation command, the control module 130 may generate the first switch signal with "0" to the second switch module 120, and the second switch module 120 may not perform the first switch operation, so that the second switch module 120 maintains the output ports of the second switch module 120 in the unconnected mode. When the control module 130 receives the first operation command, the control module 130 may generate the first switch signal with "1" to the second switch module 120 according to the first operation command, and the second switch module 120 may perform the first switch operation according to the first switch signal with "1", so that the second switch module 120 may change the one of the output ports of the second switch module 120 to the connected mode from the unconnected mode.

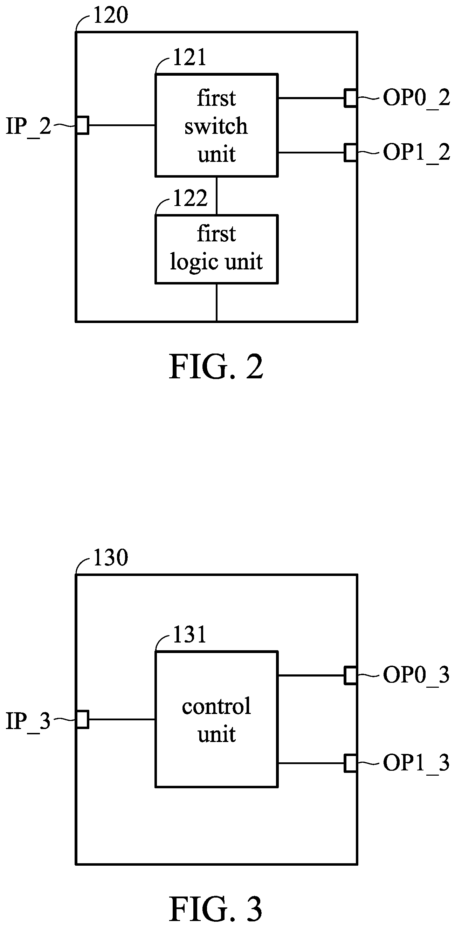

In some embodiments, the output ports of the second switch module 120 may include a first output port OPO_2 and a second output port OP1_2, and the second switch module 120 may further at least include a first input port IP_2, a first switch unit 121 and a first logic unit 122, as shown in FIG. 2. The first input port IP_2 is connected to the control module 130. The first output port OP0_2 may be set as an unconnected port. That is, in the embodiment, the first output port OP0_2 is not connected to any device. The second output port OP1_2 is connected to the chip unit 160, wherein the second output port OP1_2 is the above one of the output ports of the second switch module 120.

The first switch unit 121 is connected to the first input port IP_2, the first output port OP0_2 and the second output port OP1_2. The first switch unit 121 may connect the first input port IP_2 to the first output port OP0_2 in the unconnected mode and to connect the first input port IP_2 to the second output port OP1_2 in the connected mode according to a first logic signal.

The first logic unit 122 is connected to the first switch unit 121 and the control module 130. The first logic unit 122 may receive the first switch signal generated by the control module 130, and generate the first logic signal according to the first switch signal. For example, when the first logic unit 122 receives the first switch signal with "0", the first logic unit 122 may generate the first logic signal with "0" to the first switch unit 121, and then the first switch unit 121 may connect the first input port IP_2 to the first output port OP0_2 in the unconnected mode according to the first logic signal with "0". That is, the output ports of the second switch module 120 (i.e., the first output port OP0_2 and the second output port OP1_2) are in the unconnected mode. When the first logic unit 122 receives the first switch signal with "1", the first logic unit 122 may generate the first logic signal with "1" to the first switch unit 121, and then the first switch unit 121 may connect the first input port IP_2 to the second output port OP1_2 in the connected mode according to the first logic signal with "1". That is, the second switch module 120 changes the one of the output ports (i.e., the second output port OP1_2) to the connected mode from the unconnected mode.

In some embodiments, the control module 130 may at least include a second input port IP_3, a third output port OP0_3, a fourth output port OP1_3 and a control unit 131, as shown in FIG. 3.

The second input port IP_3 is connected to the first switch module 110. The third output port OP0_3 is connected to the first input port IP_2 of the second switch module 120. The fourth output port OP1_3 is connected to the first logic unit 122 of the second switch module 120.

The control unit 131 is connected to the second input port IP_3, the third output port OP0_3 and the fourth output port OP1_3. The control unit 131 may generate the first switch signal to the first logic unit 122 through the fourth output port OP1_3 according to the first operation command. In some embodiments, when the control unit 131 receives the first operation command, the control unit 131 may set the fourth output port OP1_3 as a general-purpose input/output (GPIO) mode, and then the control unit 131 may generate the first switch signal to the first logic unit 122 through the fourth output port OP1_3.

In some embodiments, the first switch module 110 is further connected to the chip unit 160. The control module 130 may receive a second operation command through the first switch module 110. That is, the external control device 150 may generate the second operation command, and the second operation command may be transmitted to the control module 130 through the first switch module 110. Then, the control module 130 may control the first switch module 110 to perform a second switch operation according to the second operation command, so that the external control device 150 is connected to the chip unit 160 through the first switch module 110.

In some embodiments, the control module 130 may generate a second switch signal to the first switch module 110 according to the second operation command, and the first switch module 110 may perform the second switch operation according to the second switch signal. For example, when the control module 130 does not receive the second operation command, the control module 130 may generate the second switch signal with "0" to the first switch module 110, and the first switch module 110 may not perform the first switch operation, so that the external control device 150 may not be connected to the chip 160. When the control module 130 receives the second operation command, the control module 130 may generate the second switch signal with "1" to the first switch module 110 according to the first operation command, and the first switch module 110 may perform the first switch operation according to the second switch signal with "1", so that the external control device 150 may be connected to the chip unit 160 through the first switch module 110. In some embodiments, the external control device 150 may be disconnected from the control module 130 through the first switch module 110 when the external control device 150 is connected to the chip unit 160 through the first switch module 110.

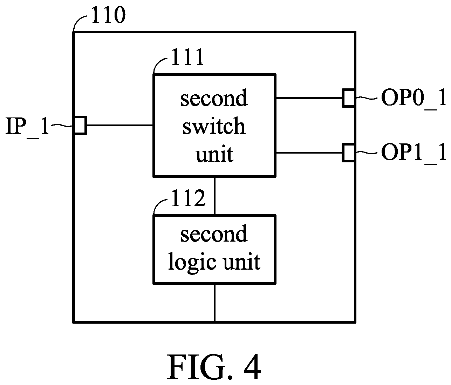

In some embodiments, the first switch module 110 may at least include a third input port IP_1, a fifth output port OP0_1, a sixth output port OP1_1, a second switch unit 111 and a second logic unit 112, as shown in FIG. 4.

The third input port IP_1 is connected to the external control device 150. The fifth output port OP0_1 connected to the second input port IP_3 of the control module 130. The sixth output port OP1_1 is connected to the chip unit 160.

The second switch unit 111 is connected to the third input port IP_1, the fifth output port OP0_1 and the sixth output port OP1_1. The second switch unit 111 may connect the third input port IP_1 to the fifth output port OP0_1 and to connect the third input port IP_1 to the sixth output port OP1_1 according to a second logic signal.

The second logic unit 112 is connected to the second switch unit 111 and the control module 130. The second logic unit 112 may receive the second switch signal generated by the control module 130, and generate the second logic signal according to the second switch signal. For example, when the second logic unit 112 receives the second switch signal with "0", the second logic unit 112 may generate the second logic signal with "0" to the second switch unit 111, and then the second switch unit 111 may connect the third input port IP_1 to the fifth output port OP0_1 according to the second logic signal with "0". When the second logic unit 112 receives the second switch signal with "1", the second logic unit 112 may generate the second logic signal with "1" to the second switch unit 111, and then the second switch unit 111 may connect the third input port IP_1 to the sixth output port OP1_1 according to the second logic signal with "1".

In some embodiments, the fourth output port OP1_3 of the control module 130 may be further connected to the second logic unit 112 of the first switch module 110, and the control unit 131 may further generate the second switch signal to the second logic unit 112 through the fourth output port OP1_3 according to the second operation command. In some embodiments, when the control unit 131 receives the second operation command, the control unit 131 may set the fourth output port OP1_3 as a GPIO mode, and then the control unit 131 may generate the second switch signal to the second logic unit 112 through the fourth output port OP1_3. In some embodiments, the fourth output port OP1_3 may at least include a first pin and a second pin (not shown), wherein the first pin is connected to the first logic unit 122 of the second switch module 120, and the second pin is connected to the second logic unit 112 of the first switch module 110. That is, the first switch signal and the second switch signal are respectively output to the first logic unit 122 of the second switch module 120 and the second logic unit 112 of the first switch module 110 through the different pins (i.e., the first pin and the second pin) of the fourth output port OP1_3.

In the entire operation of the control system 100, in an initial set, the third input port IP_1 of the first switch module 110 is connected to the fifth output port OP0_1 of the first switch module 110, and the first input port IP_2 of the second switch module 120 is connected to the first output port OP0_2 (i.e., the unconnected port) of the second switch module 120. That is, the second switch module 120 set the output ports (i.e., the first output port OP0_2 and the second output port OP1_2) in the unconnected mode. When the external control device 150 is connected to the third input port IP_1 of the first switch module 110, the external control device 150 may be connected to the control module 130 through the first switch module 110, and then the external control device 150 may communicate with the control device 130 and may obtain the information of the control device 130. At this time, the external control device 150 may be connected to the third output port OP0_3 (i.e., the unconnected port) through the first switch module 110, the control module 130 and the second switch module 120, so that the external control device 150 may not read any internal data, i.e., the output ports of the second switch module 120 (i.e., the first output port OP0_2 and the second output port OP1_2) are in the unconnected mode. Therefore, it may effectively avoid the use of a backdoor interface (such as a backdoor UART), so as to ensure the security of the product data.

Then, the user may operate the external control device 150, so that the external control device 150 may generate the first operation command, and the first operation command may be transmitted to the control module 130 (the second input port IP_3 and the control unit 131) through the first switch module 110 (the third input port IP_1 and the fifth output port OP0_1). Afterward, the when the control unit 131 of the control module 130 receives the first operation command, the control unit 131 of the control module 130 may set the fourth output port OP1_3 as the GPIO mode, and then the control unit 131 of the control module 130 may generate the first switch signal with "1" to the first logic unit 122 of the second switch module 120 through the fourth output port OP1_3 of the control module 130.

Then, when the first logic unit 122 of the second switch module 120 receives the first switch signal with "1", the first logic unit 122 of the second switch module 120 may generate the first logic signal with "1" to the first switch unit 121 of the second switch module 120, and then the first switch unit 121 of the second switch module 120 may connect the first input port IP_2 to the second output port OP1_2 in the connected mode according to the first logic signal with "1", i.e., the second switch module 120 changes the one of output ports of the second switch module 120 (i.e., the second output port OP1_2) to the connected mode from the unconnected mode. Afterward, the external control device 150 may be connected to the chip unit 160 through the second switch module 120. Therefore, the external control device 150 may communicate with the chip unit 160 through the first switch module 110, the control module 130 and the second switch module 120.

In addition, the user may operate the external control device 150, so that the external control device 150 may generate the second operation command, and the second operation command may be transmitted to the control module 130 (the second input port IP_3 and the control unit 131) through the first switch module 110 (the third input port IP_1 and the fifth output port OP0_1). Afterward, the when the control unit 131 of the control module 130 receives the second operation command, the control unit 131 of the control module 130 may set the fourth output port OP1_3 as the GPIO mode, and then the control unit 131 of the control module 130 may generate the second switch signal with "1" to the second logic unit 112 of the first switch module 110 through the fourth output port OP1_3 of the control module 130.

Then, when the second logic unit 112 of the first switch module 110 receives the second switch signal with "1", the second logic unit 112 of the first switch module 110 may generate the second logic signal with "1" to the second switch unit 111 of the first switch module 110, and then the second switch unit 111 of the first switch module 110 may connect the third input port IP_1 to the sixth output port OP1_1 according to the second logic signal with "1". Afterward, the external control device 150 may be connected to the chip unit 160 through the first switch module 110. Therefore, the external control device 150 may communicate with the chip unit 160 through the first switch module 110.

At this time, since the third input port IP_1 is switched to connect to the sixth output port OP1_1, the third input port IP_1 is not connected to the fifth output port OP0_1, so that the external control device 150 is disconnected from the control module 130 through the first switch module 110 when the external control device 150 is connected to the chip unit 160 through the first switch module 110. In addition, although the external control device 150 is disconnected from the control module 130, the control module 130 may maintain the setting of GPIO mode, so that the external control device 150 may still be connected to and communicate with the chip unit 160.

In some embodiments, when the external control device 150 is disconnected from the control module 130, if the external control device 150 needs to control the control module 130 again, the control system 100 may be reset, and then the control system 100 may be returned to the initial state, i.e., the external control device 150 may be again connected to the control module 130 through the first switch module 110, and the second switch module 120 sets the output ports of the second switch module 120 in the unconnected mode.

In some embodiments, in FIG. 1, the second switch module 120 is further connected to a chip unit 161 and a chip unit 162, and the first switch module 110 may be further connect to the chip unit 161. In some embodiments, the operation of the external control device 150 connecting to the chip unit 161 or the chip unit 162 may be refer to the operation the external control device 150 connecting to the chip unit 160, and the description thereof is not repeated herein.

In FIG. 2, the number of output ports of the second switch module 120 is two, i.e., the first output port OP0_2 and the second output port OP1_2, but the embodiment of the present invention is not limited thereto. In other embodiments, the number of output ports of the second switch module 120 may be four, eight, sixteen, etc., but the embodiment of the present invention is not limited thereto. That is, the second switch module 120 may be a 1-to-2^{N} MUX, wherein N is a positive integer greater than 1. In some embodiments, when the number of output ports of the second switch module 120 is four (i.e., the second switch module 120 is a 1-to-4 MUX), one of four output ports of the second switch module 120 (such as the first output port OP0_2) is still set to be an unconnected port, and each of the other ports of the second switch module 120 (such as the second output port OP1_2, the output port OP2_2, the output port OP3_2) is connected to a corresponding chip unit (such as the chip unit 160, the chip unit 161, the chip unit 162).

In the embodiment, when the first logic unit 122 of the second switch module 120 generates the first logic signal with "00" according to the first switch signal with "00", the first switch unit 121 of the second switch module 120 may connect the first input port IP_2 to the first output port OP0_2. When the first logic unit 122 of the second switch module 120 generates the first logic signal with "01" according to the first switch signal with "01", the first switch unit 121 of the second switch module 120 may connect the first input port IP_2 to the second output port OP1_2. When the first logic unit 122 of the second switch module 120 generates the first logic signal with "10" according to the first switch signal with "10", the first switch unit 121 of the second switch module 120 may connect the first input port IP_2 to the output port OP2_2. When the first logic unit 122 of the second switch module 120 generates the first logic signal with "11" according to the first switch signal with "11", the first switch unit 121 of the second switch module 120 may connect the first input port IP_2 to the output port OP3_2.

In some embodiments, when the number of output ports of the second switch module 120 is eight (i.e., the second switch module 120 is a 1-to-8 MUX), one of four output ports of the second switch module 120 (such as the first output port OP0_2) is still set to be an unconnected port, and each of the other ports of the second switch module 120 (such as the second output port OP1_2, the output port OP2_2, the output port OP3_2, the output port OP4_2, the output port OP5_2, the output port OP6_2, the output port OP7_2) is connected to a corresponding chip unit (such as the chip unit 160, the chip unit 161, the chip unit 162).

In the embodiment, when the first logic unit 122 of the second switch module 120 generates the first logic signal with "000" according to the first switch signal with "000", the first switch unit 121 of the second switch module 120 may connect the first input port IP_2 to the first output port OP0_2. When the first logic unit 122 of the second switch module 120 generates the first logic signal with "001" according to the first switch signal with "001", the first switch unit 121 of the second switch module 120 may connect the first input port IP_2 to the second output port OP1_2. When the first logic unit 122 of the second switch module 120 generates the first logic signal with "010" according to the first switch signal with "010", the first switch unit 121 of the second switch module 120 may connect the first input port IP_2 to the output port OP2_2. When the first logic unit 122 of the second switch module 120 generates the first logic signal with "011" according to the first switch signal with "011", the first switch unit 121 of the second switch module 120 may connect the first input port IP_2 to the output port OP3_2 ... When the first logic unit 122 of the second switch module 120 generates the first logic signal with "111" according to the first switch signal with "111", the first switch unit 121 of the second switch module 120 may connect the first input port IP_2 to the output port OP7_2.

In some embodiments, when the number of output ports of the second switch module 120 is sixteen (i.e., the second switch module 120 is a 1-to-16 MUX), one of four output ports of the second switch module 120 (such as the first output port OP0_2) is still set to be an unconnected port, and each of the other ports of the second switch module 120 (such as the second output port OP1_2, the output port OP2_2, the output port OP3_2, the output port OP4_2, the output port OP5_2, the output port OP6_2, the output port OP7_2, the output port OP8_2, the output port OP9_2, the output port OP10_2, the output port OP11_2, the output port OP12_2, the output port OP13_2, the output port OP14_2, the output port OP15_2) is connected to a corresponding chip unit (such as the chip unit 160, the chip unit 161, the chip unit 162).

In the embodiment, when the first logic unit 122 of the second switch module 120 generates the first logic signal with "0000" according to the first switch signal with "0000", the first switch unit 121 of the second switch module 120 may connect the first input port IP_2 to the first output port OP0_2. When the first logic unit 122 of the second switch module 120 generates the first logic signal with "0001" according to the first switch signal with "0001", the first switch unit 121 of the second switch module 120 may connect the first input port IP_2 to the second output port OP1_2. When the first logic unit 122 of the second switch module 120 generates the first logic signal with "0010" according to the first switch signal with "0010", the first switch unit 121 of the second switch module 120 may connect the first input port IP_2 to the output port OP2_2. When the first logic unit 122 of the second switch module 120 generates the first logic signal with "0011" according to the first switch signal with "0011", the first switch unit 121 of the second switch module 120 may connect the first input port IP_2 to the output port OP3_2 ... When the first logic unit 122 of the second switch module 120 generates the first logic signal with "1111" according to the first switch signal with "1111", the first switch unit 121 of the second switch module 120 may connect the first input port IP_2 to the output port OP15_2.

In FIG. 3, the number of output ports of the control module 130 is two, i.e., the third output port OP0_3 and the fourth output port OP1_3, but the embodiment of the present invention is not limited thereto. In other embodiments, the number of output ports of the control module 130 may be three, four, etc., but the embodiment of the present invention is not limited thereto. In some embodiments, when the number of output ports of the control module 130 is three, one of three output ports of the control module 130 (such as the fourth output port OP1_3) is still set in a GPIO mode to generate the corresponding first switch signal or the corresponding second switch signal, and each of the other ports of the control module 130 (such as the third output port OP0_3 and the output port OP2_3) is connected to a corresponding second switch module (such as the second switch module 120). In some embodiments, the number of the second switch modules 120 is equal to the number of output ports of the control module 130 minus 1, i.e., P=M-1, wherein P is the number of the second switch modules 120, the number of output ports of the control module 130, and M is a positive integer greater than 1.

In some embodiments, when the number of output ports of the control module 130 is four, one of four output ports of the control module 130 (such as the fourth output port OP1_3) is still set in a GPIO mode to generate the corresponding first switch signal or the corresponding second switch signal, and each of the other ports of the control module 130 (such as the third output port OP0_3, the output port OP2_3, the output port OP3_3) is connected to a corresponding second switch module (such as the second switch module 120).

In FIG. 4, the number of output ports of the first switch module 110 is two, i.e., the fifth output port OP0_1 and the sixth output port OP1_1, but the embodiment of the present invention is not limited thereto. In other embodiments, the number of output ports of the first switch module 110 may be three, four, etc., but the embodiment of the present invention is not limited thereto. In some embodiments, when the number of output ports of the first switch module 110 is three, one of three output ports of the first switch module 110 (such as the fifth output port OP0_1) is still connected to the control module 130, and each of the other ports of the first switch module 110 (such as the sixth output port OP1_1, the output port OP2_1) is connected to a corresponding chip unit (such as the chip unit 160, the chip unit 161).

In the embodiment, when the second logic unit 112 of the first switch module 110 generates the second logic signal with "00" according to the second switch signal with "00", the second switch unit 111 of the first switch module 110 may connect the third input port IP_1 to the fifth output port OP0_1. When the second logic unit 112 of the first switch module 110 generates the second logic signal with "01" according to the second switch signal with "01", the second switch unit 111 of the first switch module 110 may connect the third input port IP_1 to the sixth output port OP1_1. When the second logic unit 112 of the first switch module 110 generates the second logic signal with "10" according to the second switch signal with "10", the second switch unit 111 of the first switch module 110 may connect the third input port IP_1 to the output port OP2_1.

In some embodiments, when the number of output ports of the first switch module 110 is four, one of four output ports of the first switch module 110 (such as the fifth output port OP0_1) is still connected to the control module 130, and each of the other ports of the first switch module 110 (such as the sixth output port OP1_1, the output port OP2_1, the output port OP3_1) is connected to a corresponding chip unit (such as the chip unit 160, the chip unit 161).

In the embodiment, when the second logic unit 112 of the first switch module 110 generates the second logic signal with "00" according to the second switch signal with "00", the second switch unit 111 of the first switch module 110 may connect the third input port IP_1 to the fifth output port OP0_1. When the second logic unit 112 of the first switch module 110 generates the second logic signal with "01" according to the second switch signal with "01", the second switch unit 111 of the first switch module 110 may connect the third input port IP_1 to the sixth output port OP1_1. When the second logic unit 112 of the first switch module 110 generates the second logic signal with "10" according to the second switch signal with "10", the second switch unit 111 of the first switch module 110 may connect the third input port IP_1 to the output port OP2_1. When the second logic unit 112 of the first switch module 110 generates the second logic signal with "11" according to the second switch signal with "11", the second switch unit 111 of the first switch module 110 may connect the third input port IP_1 to the output port OP3_2.

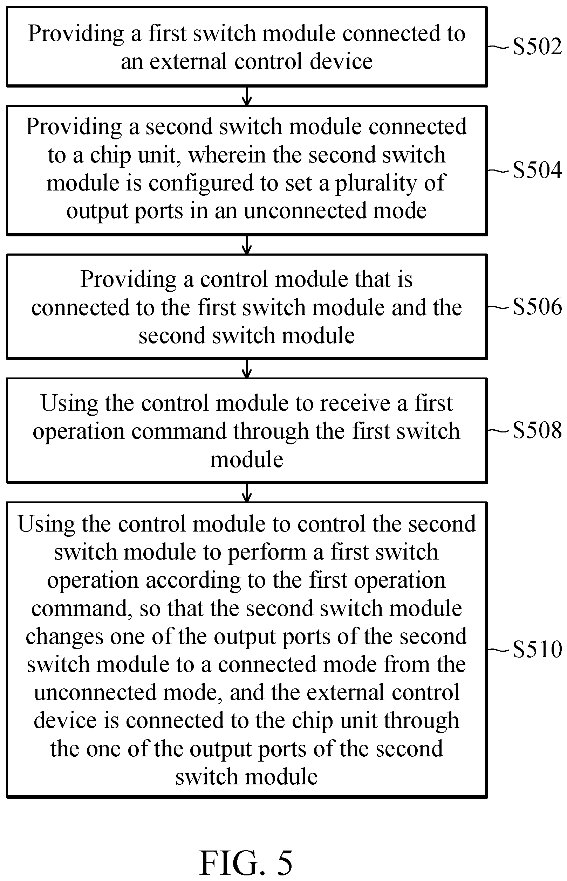

FIG. 5 is a flowchart of an operation method of a control system with an interface switching function according an embodiment of the present invention. In step S502, the method involves providing a first switch module connected to an external control device. In step S504, the method involves providing a second switch module connected to a chip unit, wherein the second switch module is configured to set a plurality of output ports in an unconnected mode. In step S506, the method involves providing a control module that is connected to the first switch module and the second switch module.

In step S508, the method involves using the control module to receive a first operation command through the first switch module. In step S510, the method involves using the control module to control the second switch module to perform a first switch operation according to the first operation command, so that the second switch module changes one of the output ports of the second switch module to a connected mode from the unconnected mode, and the external control device is connected to the chip unit through the one of the output ports of the second switch module. In some embodiments, steps S510 further includes using the control module to generate a first switch signal to the second switch module according to the first operation command, and using the second switch module to perform the first switch operation according to the first switch signal, so that the second switch module changes the one of output ports of the second switch module to the connected mode from the unconnected mode.

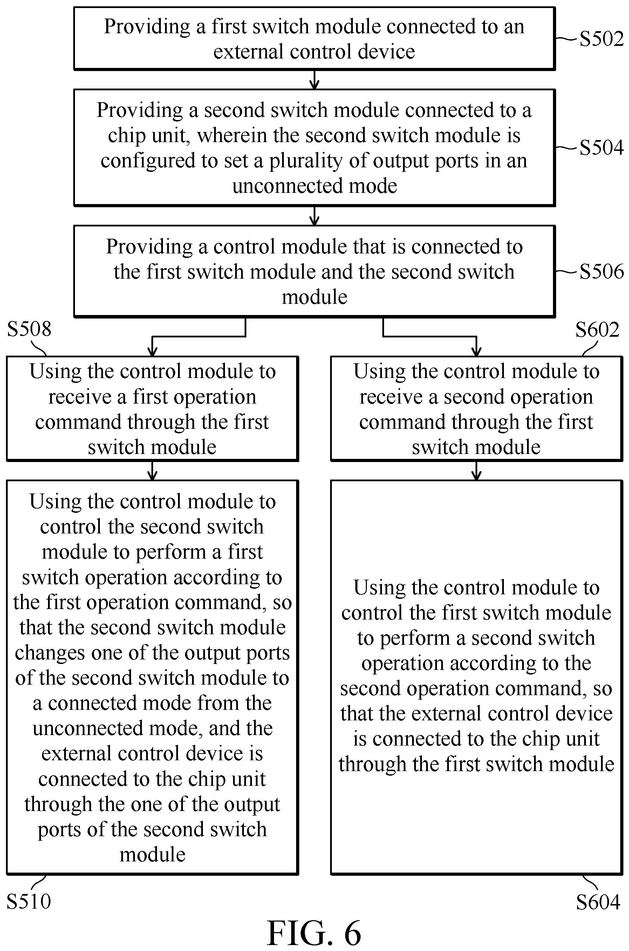

FIG. 6 is a flowchart of an operation method of a control system with an interface function according another embodiment of the present invention. In the embodiment, steps S502~S510 in FIG. 6 are the same as or similar to steps S502~S510 in FIG. 5. Accordingly, steps S502~510 in FIG. 6 may refer to the description of the embodiment of FIG. 5, and the description thereof is not repeated herein. In the embodiments, the first switch module is further connected to the chip unit.

In step S602, the method involves using the control module to receive a second operation command through the first switch module. In step S604, the method involves using the control module to control the first switch module to perform a second switch operation according to the second operation command, so that the external control device is connected to the chip unit through the first switch module. In some embodiments, step S604 further includes using the control module to generate a second switch signal to the first switch module according to the second operation command, and using the first switch module to perform the second switch operation according to the second switch signal.

It should be noted that the order of steps in FIG. 5 and FIG. 6 is only for illustrative purposes, and is not intended to limit the order of steps of the present disclosure. The user may change the order of the steps above according the requirement thereof. The flowcharts described above may add additional steps or use fewer steps without departing from the spirit and scope of the present disclosure.

In summary, according to the control system with the interface switching function and the operation method thereof disclosed by the embodiment of the present invention, the first switch module is connected to the external control device. The second switch module is connected to the chip unit. The second switch module is configured to be set in an unconnected mode. The control module receives the first operation command through the first switch module, and controls the second switch module to perform the first switch operation according to the first operation command, so that the second switch module changes to the connected mode from the unconnected mode, and the external control device is connected to the chip unit through the second switch module. Therefore, it may effectively avoid the use of a backdoor interface, so as to ensure the security of the product data.

In addition, in another embodiment of the present invention, the first switch module is further connected to the chip unit, and the control module further receives the second operation command through the first switch module, and controls the first switch module to perform the second switch operation according to the second operation command, so that the external control device is connected to the chip unit through the first switch module. Therefore, the external control device may be connected to and communicate with the chip unit through different switch modules, so as to increase the convenience of use.

While the present invention has been described by way of example and in terms of the preferred embodiments, it should be understood that the present invention is not limited to the disclosed embodiments. On the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A control system (100) with an interface switching function, comprising:
a first switch module (110), connected to an external control device (150);
a second switch module (120), connected to a chip unit (160), wherein the second switch module (120) is configured to set a plurality of output ports in an unconnected mode; and
a control module (130), connected to the first switch module (110) and the second switch module (120), wherein the control module (130) is configured to receive a first operation command through the first switch module (110), and to control the second switch module (120) to perform a first switch operation according to the first operation command, so that the second switch module (120) changes one of the plurality of output ports of the second switch module (120) to a connected mode from the unconnected mode, and the external control device (150) is connected to the chip unit (160) through the one of the plurality of output ports of the second switch module (120).

2. The control system (100) with the interface switching function as claimed in claim 1, wherein the control module (130) is configured to generate a first switch signal to the second switch module (120) according to the first operation command, and the second switch module (120) performs the first switch operation according to the first switch signal, so that the second switch module (120) changes the one of the plurality of output ports of the second switch module (120) to the connected mode from the unconnected mode.

3. The control system (100) with the interface switching function as claimed in claim 2, wherein the plurality of output ports of the second switch module (120) comprises a first output port (OP0_2) and a second output port (OP1_2), the first output port (OP0_2) is configured to be set as an unconnected port, the second output port (OP1_2) is connected to the chip unit (160), and the second switch module (120) further comprises:
a first input port (IP_2), connected to the control module (130);
a first switch unit (121), connected to the first input port (IP_2), the first output port (OP0_2) and the second output port (OP1_2), wherein the first switch unit (121) is configured to connect the first input port (IP_2) to the first output port (OP0_2) in the unconnected mode and to connect the first input port (IP_2) to the second output port (OP1_2) in the connected mode according to a first logic signal; and
a first logic unit (122), connected to the first switch unit (121) and the control module (130), wherein the first logic unit (122) is configured to receive the first switch signal, and generate the first logic signal according to the first switch signal.

4. The control system (100) with the interface switching function as claimed in claim 3, wherein the control module (130) comprises:
a second input port (IP_3), connected to the first switch module (110);
a third output port (OP0_3), connected to the first input port (IP_2) of the second switch module (120);
a fourth output port (OP1_3), connected to the first logic unit (122) of the second switch module (120); and
a control unit (131), connected to the second input port (IP_3), the third output port (OP0_3) and the fourth output port (OP1_3), wherein the control unit (131) generates the first switch signal to the first logic unit (122) through the fourth output port (OP1_3) according to the first operation command.

5. The control system (100) with the interface switching function as claimed in claim 4, wherein the first switch module (110) is further connected to the chip unit (160), and the control module (130) is further configured to receive a second operation command through the first switch module (110), and to control the first switch module (110) to perform a second switch operation according to the second operation command, so that the external control device (150) is connected to the chip unit (160) through the first switch module (110).

6. The control system (100) with the interface switching function as claimed in claim 5, wherein the control module (130) is configured to generate a second switch signal to the first switch module (110) according to the second operation command, and the first switch module (110) performs the second switch operation according to the second switch signal.

7. The control system (100) with the interface switching function as claimed in claim 6, wherein the external control device (150) is further disconnected from the control module (130) through the first switch module (110) when the external control device (150) is connected to the chip unit (160) through the first switch module (110).

8. The control system (100) with the interface switching function as claimed in claim 6, wherein the first switch module (110) comprises:
a third input port (IP_1), connected the external control device (150);
a fifth output port (OP0_1), connected to the second input port (IP_3) of the control module (130);
a sixth output port (OP1_1), connected to the chip unit (160);
a second switch unit (111), connected to the third input port (IP_1), the fifth output port (OP0_1) and the sixth output port (OP1_1), wherein the second switch unit (111) is configured to connect the third input port (IP_1) to the fifth output port (OP0_1) and to connect the third input port (IP_1) to the sixth output port (OP1_1) according to a second logic signal;
a second logic unit (112), connected to the second switch unit (111) and the control module (130), wherein the second logic unit (112) is configured to receive the second switch signal, and generate the second logic signal according to the second switch signal.

9. The control system (100) with the interface switching function as claimed in claim 8, wherein the fourth output port (OP1_3) of the control module (130) is further connected to the second logic unit (112) of the first switch module (110), and the control unit (131) further generates the second switch signal to the second logic unit (112) through the fourth output port (OP1_3) according to the second operation command.

10. An operation method of a control system with an interface switching function, comprising:
providing a first switch module connected to an external control device (S502);
providing a second switch module connected to a chip unit, wherein the second switch module is configured to set a plurality of output ports in an unconnected mode (S504);
providing a control module, that is connected to the first switch module and the second switch module (S506);
using the control module to receive a first operation command through the first switch module (S508); and
using the control module to control the second switch module to perform a first switch operation according to the first operation command, so that the second switch module changes one of the plurality of output ports of the second switch module to a connected mode from the unconnected mode, and the external control device is connected to the chip unit through the one of the plurality of output ports of the second switch module (S510).

11. The operation method of the control system with the interface switching function as claimed in claim 10, wherein the step of using the control module to control the second switch module to perform the first switch operation according to the first operation command, so that the second switch module changes the one of the plurality of output ports of the second switch module to the connected mode from the unconnected mode, comprises:
using the control module to generate a first switch signal to the second switch module according to the first operation command, and using the second switch module to perform the first switch operation according to the first switch signal, so that the second switch module changes the one of the plurality of output ports of the second switch module to the connected mode from the unconnected mode.

12. The operation method of the control system with the interface switching function as claimed in claim 11, wherein the first switch module is further connected to the chip unit, and the operation method further comprises:
using the control module to receive a second operation command through the first switch module (S602); and
using the control module to control the first switch module to perform a second switch operation according to the second operation command, so that the external control device is connected to the chip unit through the first switch module (S604).

13. The operation method of the control system with the interface switching function as claimed in claim 12, wherein the step of using the control module to control the first switch module to perform a second switch operation according to the second operation command comprises:
using the control module to generate a second switch signal to the first switch module according to the second operation command, and using the first switch module to perform the second switch operation according to the second switch signal.

## Amended claims

### Amended claims in accordance with Rule 137(2) EPC.

1. A control system (100) with an interface switching function, comprising:
a first switch module (110), connected to an external control device (150), wherein the first switch module (110) is a universal serial bus switch;
a second switch module (120), connected to a chip unit (160), wherein the second switch module (120) is configured to set a plurality of output ports in an unconnected mode, and the second switch module (120) is a universal asynchronous receiver/transmitter multiplexer; and
a control module (130), connected to the first switch module (110) and the second switch module (120), wherein the control module (130) is configured to receive a first operation command through the first switch module (110), to control the second switch module (120) to perform a first switch operation according to the first operation command, so that the second switch module (120) changes one of the plurality of output ports of the second switch module (120) to a connected mode from the unconnected mode, and to perform a signal conversion between the first switch module (110) and the second switch module (120) to connect the external control device (150) to the chip unit (160) through the first switch module (110), the control module (130) and the one of the plurality of output ports of the second switch module (120).

2. The control system (100) with the interface switching function as claimed in claim 1, wherein the control module (130) is configured to generate a first switch signal to the second switch module (120) according to the first operation command, and the second switch module (120) performs the first switch operation according to the first switch signal, so that the second switch module (120) changes the one of the plurality of output ports of the second switch module (120) to the connected mode from the unconnected mode.

3. The control system (100) with the interface switching function as claimed in claim 2, wherein the plurality of output ports of the second switch module (120) comprises a first output port (OPO_2) and a second output port (OP1_2), the first output port (OP0_2) is configured to be set as an unconnected port, the second output port (OP1_2) is connected to the chip unit (160), and the second switch module (120) further comprises:
a first input port (IP_2), connected to the control module (130);
a first switch unit (121), connected to the first input port (IP_2), the first output port (OP0_2) and the second output port (OP1_2), wherein the first switch unit (121) is configured to connect the first input port (IP_2) to the first output port (OP0_2) in the unconnected mode and to connect the first input port (IP_2) to the second output port (OP1_2) in the connected mode according to a first logic signal; and
a first logic unit (122), connected to the first switch unit (121) and the control module (130), wherein the first logic unit (122) is configured to receive the first switch signal, and generate the first logic signal according to the first switch signal.

4. The control system (100) with the interface switching function as claimed in claim 3, wherein the control module (130) comprises:
a second input port (IP_3), connected to the first switch module (110);
a third output port (OP0_3), connected to the first input port (IP_2) of the second switch module (120);
a fourth output port (OP1_3), connected to the first logic unit (122) of the second switch module (120); and
a control unit (131), connected to the second input port (IP_3), the third output port (OP0_3) and the fourth output port (OP1_3), wherein the control unit (131) generates the first switch signal to the first logic unit (122) through the fourth output port (OP1_3) according to the first operation command.

5. The control system (100) with the interface switching function as claimed in claim 4, wherein the first switch module (110) is further connected to the chip unit (160), and the control module (130) is further configured to receive a second operation command through the first switch module (110), and to control the first switch module (110) to perform a second switch operation according to the second operation command, so that the external control device (150) is connected to the chip unit (160) through the first switch module (110).

6. The control system (100) with the interface switching function as claimed in claim 5, wherein the control module (130) is configured to generate a second switch signal to the first switch module (110) according to the second operation command, and the first switch module (110) performs the second switch operation according to the second switch signal.

7. The control system (100) with the interface switching function as claimed in claim 6, wherein the external control device (150) is further disconnected from the control module (130) through the first switch module (110) when the external control device (150) is connected to the chip unit (160) through the first switch module (110).

8. The control system (100) with the interface switching function as claimed in claim 6, wherein the first switch module (110) comprises:
a third input port (IP_1), connected the external control device (150);
a fifth output port (OP0_1), connected to the second input port (IP_3) of the control module (130);
a sixth output port (OP1_1), connected to the chip unit (160);
a second switch unit (111), connected to the third input port (IP_1), the fifth output port (OP0_1) and the sixth output port (OP1_1), wherein the second switch unit (111) is configured to connect the third input port (IP_1) to the fifth output port (OPO_1) and to connect the third input port (IP_1) to the sixth output port (OP1_1) according to a second logic signal;
a second logic unit (112), connected to the second switch unit (111) and the control module (130), wherein the second logic unit (112) is configured to receive the second switch signal, and generate the second logic signal according to the second switch signal.

9. The control system (100) with the interface switching function as claimed in claim 8, wherein the fourth output port (OP1_3) of the control module (130) is further connected to the second logic unit (112) of the first switch module (110), and the control unit (131) further generates the second switch signal to the second logic unit (112) through the fourth output port (OP1_3) according to the second operation command.

10. An operation method of a control system with an interface switching function, comprising:
providing a first switch module connected to an external control device, wherein the first switch module is a universal serial bus switch (S502);
providing a second switch module connected to a chip unit, wherein the second switch module is configured to set a plurality of output ports in an unconnected mode, and the second switch module is a universal asynchronous receiver/transmitter multiplexer (S504);
providing a control module, that is connected to the first switch module and the second switch module (S506);
using the control module to receive a first operation command through the first switch module (S508); and
using the control module to control the second switch module to perform a first switch operation according to the first operation command, so that the second switch module changes one of the plurality of output ports of the second switch module to a connected mode from the unconnected mode, and to perform a signal conversion between the first switch module and the second switch module to connect the external control device to the chip unit through the first switch module, the control module and the one of the plurality of output ports of the second switch module (S510).

11. The operation method of the control system with the interface switching function as claimed in claim 10, wherein the step of using the control module to control the second switch module to perform the first switch operation according to the first operation command, so that the second switch module changes the one of the plurality of output ports of the second switch module to the connected mode from the unconnected mode, comprises:
using the control module to generate a first switch signal to the second switch module according to the first operation command, and using the second switch module to perform the first switch operation according to the first switch signal, so that the second switch module changes the one of the plurality of output ports of the second switch module to the connected mode from the unconnected mode.

12. The operation method of the control system with the interface switching function as claimed in claim 11, wherein the first switch module is further connected to the chip unit, and the operation method further comprises:
using the control module to receive a second operation command through the first switch module (S602); and
using the control module to control the first switch module to perform a second switch operation according to the second operation command, so that the external control device is connected to the chip unit through the first switch module (S604).

13. The operation method of the control system with the interface switching function as claimed in claim 12, wherein the step of using the control module to control the first switch module to perform a second switch operation according to the second operation command comprises:
using the control module to generate a second switch signal to the first switch module according to the second operation command, and using the first switch module to perform the second switch operation according to the second switch signal.
